# EUROPEAN PATENT SPECIFICATION

(11) **EP 3 722 264 B1**
(45) Date of publication and mention of the grant of the patent: **03.04.2024**
(21) Application number: 19168350.7
(22) Date of filing: 10.04.2019
(51) Int. Cl.: C02F 9/00

(54) **MULTIFUNCTIONAL DEVICE FOR THE TREATMENT OF FLUIDS**
MULTIFUNKTIONALE VORRICHTUNG ZUR BEHANDLUNG VON FLÜSSIGKEITEN
DISPOSITIF MULTIFONCTIONS POUR LE TRAITEMENT DE FLUIDES

(43) Date of publication of application: 14.10.2020
(73) Proprietor: Interdonato, Orazio, 98049 Villafranca Tirrena (Messina) (IT)
(72) Inventor: Interdonato, Orazio, 98049 Villafranca Tirrena (Messina) (IT)
(74) Representative: Lunati & Mazzoni S.r.L.

(56) References cited:
- EP-A1- 3 241 601
- WO-A2-2010/056486
- US-A- 6 093 312

## Description

The present invention relates to a multifunction device for the treatment of fluids of the type specified in the preamble of the first claim.

In particular, the present invention relates to a device suitable for treating liquid and gaseous substances.

Similar devices are disclosed in the patent applications WO 2010/056486 A2, US 6 093 312 A and EP 3 241 601 A1.

Devices for the treatment of fluid substances that are widely used especially in the medical field are currently known.

Such types of devices are used, for example, for the treatment of liquids that can be ingested by the human body, such as water or medical aqueous solutions, and often feature very complex and artificial structures comprising tangled netting and piping among a plurality of hydraulic pumps and filtering systems.

The devices can also provide domestic uses and even in these cases they have complex systems in which only a portion of water is actually made available for use by the user.

The described prior art has a few major drawbacks.

In particular, the complexity of the piping, as well as the size of the tanks mainly used in the structures of the prior art, cause the aforementioned devices to be large, and therefore the latter occupy considerable spaces and large dimensions, which make them not very portable or versatile.

Furthermore, in addition to increasing the bulk of the devices, as known in the field of plant engineering, the extended piping systems used introduce heavy load losses, placing a heavy burden on internal pressures and flow rates, as well as on interstitial deposits of residual substances.

Another serious drawback is that the known devices, since they exhibit low efficiencies, result in waste in terms of water involved in the purification process, which can reach values of around 70%.

Lastly, the aforementioned devices are almost all monofunctional and hardly usable by a non-expert consumer both in terms of installation and use.

In this context, the technical task underlying the present invention is to devise a multifunction device for the treatment of fluids, which is capable of substantially obviating the above-mentioned drawbacks.

Within the scope of said technical task, a major object of the invention is to obtain a device which is suitable to carry out multiple functions within the same container. Another major object of the invention is to provide a simple, compact and consequently versatile device from the point of view of the function as well as of the users to which it refers.

In particular, a further object of the invention is to provide a device which can guarantee high efficiency and minimal waste of fluid.

In conclusion, a further object of the invention is to provide a device which can easily be used by any user, hence also a non-expert user, both for domestic and amateur uses and, for example, health-care and therefore professional uses.

The technical task and the specified objects are achieved as claimed in the appended claim 1. Exemplary preferred embodiments are described in the dependent claims.

Preferred embodiments are set forth in the dependent claims.

The features and advantages of the invention will be apparent from the detailed description of preferred embodiments of the invention, with reference to the accompanying drawings, in which:

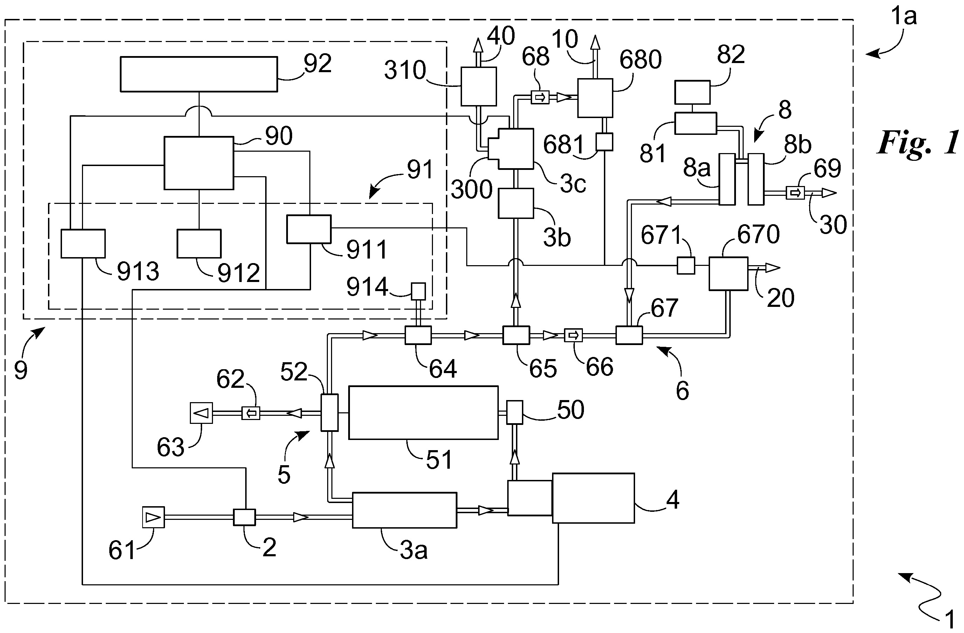

**Fig. 1** shows a diagram of the structure of the device according to the invention;

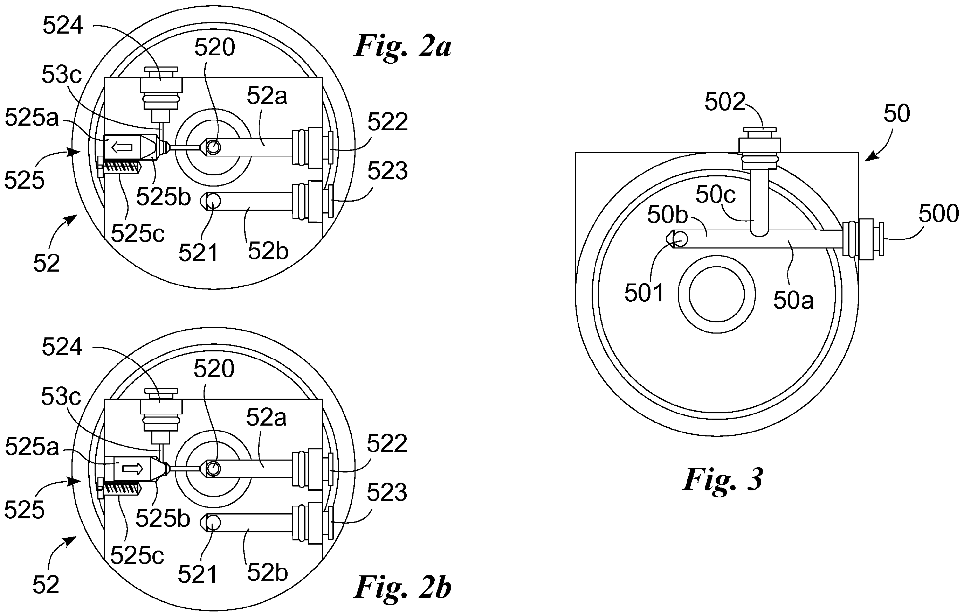

**Fig. 2a** illustrates the open configuration of the adjustment screw inside the outlet section;
**Fig. 2b** represents the closed configuration of the adjustment screw inside the outlet section; and
**Fig. 3** is a view of the inlet section.

Herein, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, these terms, if associated with a value, preferably indicate a divergence of not more than 10% from said value.

Furthermore, when used, terms such as "first", "second", "higher", "lower", "main" and "secondary" do not necessarily identify an order, a priority relationship or a relative position, but can simply be used to distinguish more clearly the different components from each other.

With reference to the Figures, the multifunction device for the treatment of fluids according to the invention is indicated as a whole by the numeral 1.

The term fluids indicates, as per convention, all substances that become unlimitedly deformed if subjected to shear stress, and therefore can be liquid, aeriform, gas and/or plasma.

The multifunction device 1 is preferably located inside a container or case **1a** of any shape or size and preferably in the form of a rectangular parallelepiped.

Said case 1a is suitable to contain the whole device 1 and allow the latter to communicate and/or connect with the outside and therefore includes, for example, holes.

The multifunction device 1 comprises at least one valve **2,** a first filtration apparatus **3a,** a pressurisation unit **4,** a permeation device **5,** and connecting members **6.**

In particular, the valve 2 can be a servo valve or a simple hydraulic valve, for example of the non-return type, and is preferably a solenoid valve.

The valve 2 is suitable to allow or obstruct the entry of a fluid flow into the multifunction device 1 and therefore is comparable, for example, to a connection tap between the outside and the inside of the aforementioned device 1.

For instance, the device 1 can be connected to any connecting member 6 such as, for example, a hydraulic feed intake **61** of the type found in every common home, and the valve 2 can allow or block the flow of water coming from the hydraulic intake directed towards the inside of the device 1.

The connecting members 6 are preferably quick-coupling members.

The valve 2, preferably a solenoid valve, for example, consists of an internal membrane comprising a ferrous core and occluding the connection channel between the inside and the outside of the device 1.

Said membrane can thus be opened or closed again by means of a solenoid with a current flowing in such a way as to attract or repel the ferrous cores of the membrane.

In this way the flow of fluid can be stopped or triggered.

The valve 2 is of the type known in the current state of the art and is preferably a solenoid valve.

The first filtration apparatus 3a preferably communicates with the valve 2, and in particular is located between the valve 2 and the permeation device 5.

It is suitable to absorb particles present in the fluid delivered by means of the valve 2 inside the device 1.

Such absorbed particles are preferably at least 5 µm in size.

The first filtration apparatus 3a preferably comprises an absorbent filler, for example of the activated charcoal type.

The charcoal filler optionally included in the first filtration apparatus 3a is suitable to reduce many volatile organic chemicals, also referred to as VOCs, such as for example pesticides, herbicides, chlorine, benzene, trihalomethane (THM) compounds, radon, solvents, and other impurities found, for example, in water from common taps.

The first filtration apparatus 3a preferably removes particles up to 5 µm, such as for example protozoa, for example those belonging to the genera Giardia and Cryptosporidium, and in addition is suitable to remove chlorine, lead, mercury, iron and hydrogen sulphide from the water resources.

The filtration of metals is possible, for example, by adding in the filter a copper-zinc compound, referred to as KDF (kinetic degradation fluxion), suitable for removing the aforementioned metal impurities by means of oxidation-reduction chemical processes.

The first filtration apparatus 3a is, for example, of the activated charcoal type compliant with UNI EN ISO 12915 standards related to granular carbons for the treatment of drinking water intended for human consumption.

Preferably, the first filtration apparatus 3a is also operatively connected to the pressurisation unit 4.

The pressurisation unit 4 can be any apparatus suitable to regulate the pressure and the flow rate of the fluid introduced into the multifunction device 1.

Preferably, the pressurisation unit 4 is a displacement pump of the type commonly known in the plant engineering field and is, for example, an electric motor coupled to a rotary or diaphragm pump.

The displacement pump, for example comprising a 180 W-power and 220 V-power supply rotary motor, guarantees a flow rate of 300 L/hr.

The pressurisation unit 4 is operatively connected to the permeation device 5.

The permeation device 5 comprises three main portions: an inlet portion **50,** a central body **51,** and an outlet portion **52.**

The inlet portion 50, for example, is operatively connected to the pressurisation unit 4.

Preferably, the inlet portion is substantially a cap comprising a feed channel **50a,** forking into a main inlet channel **50b** and a secondary inlet channel **50c,** suitable to allow the passage of a fluid therein.

In particular, the feed channel 50a connects a feed hole **500** to two holes.

These holes are a first primary inlet hole **501** and a secondary inlet hole **502.**

The feed hole 500 is preferably suitable to receive the fluid directly from the pressurisation unit 4.

It directs the fluid coming from the pressurisation unit 4 towards the outlet holes.

For instance, the primary inlet hole 501 is located at the outlet of the main inlet channel 50b and preferably directly introduces the fluid into the central body 51.

For instance, the secondary inlet hole 502 is located at the outlet of the secondary inlet channel 50c and is preferably suitable to introduce the fluid coming from the pressurisation unit 4 into an optional additional permeation device, or it can be used to measure the pressure of the fluid coming from the pressurisation unit 4.

The measurement, for example, can take place by means of a pressure sensor of the commonly known type arranged at the secondary inlet hole 502 and obstructing the outflow of fluid.

Preferably, as mentioned, the central body 51 receives the fluid entering from the primary inlet hole 501.

The central body 51 preferably consists of an osmotic membrane suitable to purify the fluid introduced therein.

The osmotic membrane is a selectively permeable or semi-permeable membrane as it allows, for example, the passage therein by diffusion of certain molecules or ions.

The pores included in the osmotic membrane, for example, feature sizes varying between 0.01 and 0.0001 µm.

Furthermore, the membrane preferably consists of integrated baffles and does not have stagnation areas within the central body 51, thereby limiting the possibility of interstitial residual deposits resulting in proliferation of bacterial colonies.

This last aspect is underlined by the fact that the central body 51 integrates with the membrane and is not a separate container. Therefore, any areas of shadow between the central body 51 and the osmotic membrane are reduced to zero.

The principle of operation of the permeation device 5, for example mainly defined inside the central body 51, is thus defined by reverse osmosis, a commonly known technique and therefore not further discussed in the context of the description.

The central body 51 introduces the filtered fluid, the latter indicating the fluid flowed through the osmotic membrane, for example inside the outlet portion 52.

This outlet portion 52 comprises a main discharge hole **520,** a secondary discharge hole **521,** a main outlet hole **522,** a secondary outlet hole **523,** a mixing hole **524** and a regulator **525.**

The outlet portion 52, for example, is substantially a cap preferably located at the outlet of the central body 51, and therefore arranged opposite the inlet portion 51.

The aforesaid outlet portion 52 further consists of a main outlet channel **52a,** a secondary outlet channel **52b,** and a mixing channel **53c.**

The main outlet channel 52a preferably connects the main discharge hole 520 to the main outlet hole 522.

The secondary outlet channel 52b connects the secondary discharge hole 521 to the secondary outlet hole 523.

Instead, the mixing channel 53c preferably connects the mixing hole 524 to the main outlet channel 52a.

The main outlet hole 522, for example, is suitable to introduce the filtered fluid coming from the main outlet channel 52a connected to the central body 51 by means of the main discharge hole 520.

The secondary outlet hole 523 is suitable to receive therein the discharge fluid coming from the secondary outlet channel 52b connected to the central body 51 by means of the secondary discharge hole 521.

In fact, not all the fluid flowed through the body 51 is used by the multifunction device 1.

For instance, the filtered fluid accounts for approximately 40% of the total fluid entering from the valve 2, whereas the discharge fluid accounts for approximately 60% of the total fluid from the valve 2.

Therefore, the secondary outlet hole 523, for example, is connected to a first valve connector **62.**

For instance, the first valve connector 62 may be a connector suitable to be coupled to a discharge intake **63** of the type found in common houses.

The first valve connector 62 preferably includes therein a check valve suitable to regulate the flow of fluid exiting the multifunction device 1.

The mixing channel 53c communicates with the main outlet channel 52a through the regulator 525.

For instance, the regulator 525 is located at the entrance between the two channels 53c and 52a, can consist of any opening and closing control mechanism, and is suitable to allow or obstruct the communication between the mixing channel 53c and the main outlet channel 52a.

The regulator 525 can be a mechanical or electrical valve, and so forth.

Said regulator 525 preferably comprises a slider **525a,** a chamber **525b,** and control means **525c.**

The chamber 525b is a space formed within the outlet portion 52 operatively connected to the mixing channel 53c and the main outlet channel 52a.

The chamber 525b may have different sizes and shapes and is preferably a substantially cylindrical cavity.

The slider 525a is located inside this cavity.

The aforementioned slider can also have any shape and size as long as it can be housed and moved inside the chamber 525b and as long as it is suitable to obstruct, at least in one position, the communication between the mixing channel 53c and the main outlet channel 52a.

Moreover, the slider 525a is preferably mechanically controllable by the control means 525c.

Therefore, the slider 525a may comprise cogwheels, or it may be a piston, and more preferably defines a cylinder having a threaded side surface. Furthermore, a protuberance suitable to obstruct at least one of the channels 53c and 52a is arranged at at least one base surface of the cylinder.

Therefore, the chamber 525b is preferably a cylindrical guide comprising the slider 525a.

The control means 525c preferably feature an adjustment screw operatively connected to the slider 525b and suitable to control the slider 525a inside the chamber 525b.

The term "control" refers to both the movement function and the locking function. Alternatively to what has been described previously, the control means 525c can coincide with the slider 525a and therefore, for example, the slider 525a could be a screw threaded cap suitable to be moved inside the chamber 525b.

The outlet portion 52 is preferably operatively connected to the aforementioned valve connector 62 and is also operatively connected to the first filtration apparatus 3a via the mixing hole 524.

Therefore, for example, the regulator 525 allows the fluid coming from the first filtration apparatus 3a to mix with the filtered fluid coming from the central body 51 of the permeation device 5.

This mixing is preferably controlled, and therefore adjustable, by the control means 525c.

As a consequence, it is possible to vary the salinity levels in the fluid available at the outlet of the main outlet hole 522.

The main outlet hole 522 is operatively connected to at least one of the aforementioned connecting members 6.

The connecting members 6 are elements connecting the various parts of the multifunction device 1 and suitable to allow, and optionally change the fluid flow inside the device 1.

Therefore, as already mentioned, the connecting members comprise, for example, the feed intake 61, the first valve connector 62, and the discharge intake 63. Moreover, the connecting members 6 comprise other elements such as, for example, a first connector **64,** a second connector **65,** a second valve connector **66,** a third valve connector **68,** a third connector **67,** and a fourth valve connector **69.** The first connector 64 can be any type of connector that is suitable to allow the passage therein of the processed fluid.

"Processed fluid" refers to the fluid coming from the main outlet hole 522, for example consisting of a mixture of fluid coming from the filtration apparatus 3a and filtered fluid coming from the permeation device 5.

The first connector 64, for example, is a tee connector commonly found in hydraulic systems.

The first connector 64 preferably connects together the main outlet hole 522, the second connector 65, and a capture element **914.**

This capture element 914 is an element suitable to detect characteristic parameters of the processed fluid and therefore, for example, is a conductivity probe designed to continuously check the quality of the fluid delivered by the multifunction device 1. The second connector 65 can have different shapes and sizes provided it has the compactness characteristics required for housing the entire device 1 inside the case 1a.

In particular, for instance, the second connector 65 is of the same type as the first connector 64 and, for example, is connected to the first connector 64, the second valve connector 66 and a second filtration apparatus **3b.**

The second valve connector 66, for example, is of the type already described with reference to the first valve connector 62.

In particular, it preferably connects the second connector 65 to the third connector 67.

The second filtration apparatus 3b is preferably a filter suitable to alkalise and ionize the fluid introduced therein by means of an oxidation-reduction or redox reaction.

In particular, for instance, the second filtration apparatus 3b comprises a zeolitic compound and, for example, is of volcanic or other type of origin, for example of ceramic origin.

The second filtration apparatus 3b, as already mentioned, is preferably operatively connected to the second connector 65 and is also operatively connected to the third valve connector 68.

Preferably, the filtration apparatus 3b is connected to the third valve connector 68 through a cooling tank **3c.**

Therefore, the cooling tank 3c is preferably arranged between the second filtration apparatus 3b and the third valve connector 68 so as to receive alkalised and ionised fluid and allow its delivery to the third valve connector 68 after the cooling thereof.

The cooling tank 3c can have any size, depending on the type of use for which the device is intended 1. Furthermore, the cooling tank 3c preferably includes a convection cooling system by water heat exchange.

In this way, the device 1 can also be installed in environments with poor ventilation and air circulation and, in the case of low flow rate and/or pressure of the cooling water, it is possible to deactivate the operation of the cooling system to safeguard its service life through appropriate control means described below.

In particular, preferably, the cooling tank 3c is made of stainless steel, but different materials could also be provided as long as they are suitable to allow proper preservation of the fluid included therein.

The refrigerated fluid can also feed a carbonator **300.**

The carbonator 300 is preferably inserted in said cooling tank 3c.

In particular, the carbonator 300 is suitable to allow the refrigerated fluid to bind with carbon dioxide (CO₂) in order to become a carbonated refrigerated fluid, preferably sparkling water.

In addition, since such a carbonator 300 is preferably inserted in the cooling tank 3c, it cools down automatically, thereby achieving energy savings. As the fluid entering the carbonator 300 has been processed by the permeation device 5 providing the processed fluid, since the fluid is, for example, water, its pH has become acidic. Furthermore, since CO₂ tends to acidify the water, in order to increase its bond with the osmotised water, the water entering the carbonator 300, before it binds to the CO₂, is preferably made alkaline through the second filtration apparatus 3b and cooled through the cooling tank 3c, as the bond between CO₂ and water is favoured by low temperature and alkaline pH.

In any case, the fluid entering the cooling tank 3c may not flow into the carbonator 300, but could simply be introduced and led to the third valve connector 68.

The third valve connector 68 also preferably has the features already set out with reference to the first and second valve connectors 62 and 66.

In addition, the third valve connector 68 is operatively connected to the first delivery tap **680.**

This first delivery tap 680 is any element suitable to allow or obstruct on command the flow of processed fluid passing therein.

Preferably, the first delivery tap 680 is a mechanical tap comprising a slider, which can be moved, for example, by controls defined by a first delivery lever **681.**

Therefore, the first delivery lever 681 is preferably suitable to move the slider of the first delivery tap 680.

The processed fluid further subjected to filtration by means of the second filtration apparatus 3b and to cooling by means of the cooling tank 3c flows to the first delivery tap 680.

Therefore, the first delivery tap 680 preferably delivers, on command, a cooled and alkalised fluid **10,** for example alkaline water enriched with negative ions.

Hence, the carbonator 300, in turn, is operatively connected to at least a third delivery tap **310.** The third delivery tap 310 is also any element suitable to allow or obstruct on command the flow of processed, in particular osmotised, alkalised, cooled and carbonated fluid passing therein.

The third delivery tap 310 is any element suitable to allow or obstruct on command the flow of processed fluid passing therein.

Therefore, the third delivery tap 310 is suitable to allow the outflow, preferably on command, of a carbonated refrigerated fluid **40,** for example alkaline water enriched with negative ions, refrigerated and carbonated with carbon dioxide.

Therefore, the device 1 allows the delivery of the cooled alkalised fluid 10 and alternatively or simultaneously the carbonation and delivery of the cooled alkalised fluid 10 so as to provide the carbonated refrigerated fluid 40, which has therefore been treated, alkalised, cooled and carbonated.

The third connector 67, as mentioned, is operatively connected to the third valve connector 66 and is also operatively connected to a second gas generator tap **8.**

For instance, the third connector 67 is a tee connector suitable to allow a gaseous fluid to be introduced into a liquid fluid, and is therefore preferably a Venturi fitting.

The Venturi fitting, in fact, guarantees low overall dimensions and a high level of efficiency achieved for the desired function.

Therefore, differently from the other elements included in the connecting members, the third connector 67 is preferably not only suitable for directing the processed fluid, but is also suitable for mixing it with a substance such as a gaseous substance.

The introduction of the gaseous substance, for example, occurs by means of the operatively connected gas generator 8.

In particular, the gas generator 8 consists of an apparatus, known in the state of the art, which sucks air and injects it into a device that transforms the oxygen (O₂) contained in the air into ozone (Os) by using the electrical principle of the corona discharge effect.

Alternatively, the gas generator 8 may comprise two tanks: a fluid tank **8a** and a gas tank **8b.**

The fluid tank 8a, if any, is for example operatively connected to the connector 67. On the other hand, the gas tank 8b is preferably suitable to contain part of the ozone in order to deliver it.

Therefore, in each configuration, the gas generator 8 is preferably operatively connected to the fourth valve connector 69 of the type already mentioned, for example, in the description of the first valve connector 62.

The valve connector 69 preferably differs from the other valve connectors since it allows or completely obstructs the escape of the sole gas **30** generated inside the generator 8, for example ozone. Therefore, preferably, the valve connector 69, in the alternative configuration, can be operatively connected to said gas tank 8b.

For instance, the gas generator 8 is suitable to generate the gas to be blown into the fluid circulating in the multifunction device 1 and is therefore preferably an ozone generator. Preferably, the gas generator 8 sends the gas to the fluid from the fluid tank 8a. The fluid tank 8a, if any, contains the gas, preferably ozone, for insufflation into the treated fluid.

In addition, the gas generator 8, for example, is operatively connected to a gas pump **81.**

The gas pump 81 is a pump of the commonly known type suitable for supplying gas, such as air or another gas, to the gas generator 8.

In particular, preferably, the gas pump 81 allows air suction into the gas generator 8 and is of the electric type.

Lastly, an electronic board **82** is operatively connected to the gas pump 81 and the gas generator 8.

The electronic board 82 can be any type of board provided it is suitable to power the gas pump 81 and the gas generator 8 and transmit, on command, electrical discharges to the pump 81 and/or the generator 8.

Moreover, the electronic board 82 is preferably suitable to allow the gas pump 81 to be controlled so as to control the ozonation. Therefore, it can provide wireless interface means, such as Wi-Fi, Bluetooth^{™}, infrared or other systems, to allow control via remote means, such as remote controls, and allow the programming of the operation of the gas pump 81. In addition, the electronic board 82 may be operatively connected to other components of the device 1 designed to control the device 1 itself.

As said, the connector 67 is further preferably connected to a second delivery tap **670,** in turn connected to a second delivery lever **671.**

The second delivery tap 670 and the second delivery lever 671, for example, have the same characteristics already described with regard to the first delivery tap 680 and the first delivery lever 681.

Therefore, said second delivery tap 670 is preferably suitable, for example thanks to the control performed by the second delivery lever 671, to deliver the fluid flowing therein, and thus an ozonated fluid **20,** for example water enriched with ozone. Lastly, the multifunction device preferably comprises control means **9.**

The control means 9 can be means of controlling the proper operation of the device and are means which, for example, allow the monitoring thereof, such as sensors or the like.

The control means 9 preferably consist of an electronic controller **90,** sensor members **91** and a display **92.**

In particular, for example, the electronic controller 90 is an element suitable to capture the signals from the sensors 91 and is preferably of the analogical and/or digital type.

The sensor members 91 can be suitable to measure different quantities. They can be, for example, manometric or resistive, or the like, and comprise at least one sensor, and preferably four.

In particular, the sensor members 91 preferably comprise, in addition to the aforementioned capture element 914, a thrust meter **911,** a flooding sensor **912,** and a temperature sensor **913.**

The thrust meter 911 is a sensor of the commonly known type suitable for detecting the activation negative pressures, for example between 1 and 5 bars, generated by the movement of the delivery levers 681 and 671 and therefore by the opening of the taps 680 and 670.

In particular, the thrust meter 911 is also suitable to communicate with the valve 2 by means of the electronic controller 90, once the activity of the dispensing levers 681 and 671 has been detected.

The opening of the taps 681 and 671, for example, results in activation of the valve 2, accompanied by the introduction of fluid inside the multifunction device 1.

The thrust meter 911 is also operatively connected to the electronic controller 90 and, for example, can send the information collected to the latter.

The flooding sensor 912 is preferably a humidity sensor, for example an electronic board suitable to cause the closing of the electrical circuit in the presence of diffused humidity.

In particular, the flooding sensor 912 is preferably suitable to detect any unwanted fluid leaks inside the case 1a of the device 1 and is operatively connected to the electronic controller 90.

Finally, the temperature sensor 913 is preferably operatively connected to the pressurisation unit 4 and the electronic controller 90.

In particular, the temperature sensor 913 is of the commonly known type, for example a mechanical thermostat and/or a temperature probe, and preferably suitable for detecting the operating temperatures of the pressurisation unit 913, for example the displacement pump, and more suitably of the motor for moving the same.

However, the temperature sensor 913 could also be, and preferably is, operatively connected to the cooling tank 3c so as to detect the operating temperatures of the cooling tank 3c itself.

In this way it is possible to record any operating anomalies and inform the electronic controller 90, which is also able, for example, to electronically control the pressurisation unit 4 and/or the heat exchanger system connected to the cooling tank 3c.

In particular, the electronic controller 90 can deactivate the operation of the cooling system once a predetermined temperature threshold value has been reached. For instance, two temperature threshold values can be selected, one defined as "summer" and the other as "winter", in order to provide energy savings during the winter season compared to the summer period, the latter naturally being a period in which the device requires a greater cooling capacity than the former. The two temperature threshold values can be changed and programmed.

Therefore, the electronic controller 90 can be operatively connected to the carbonator 300 and the cooling system of the cooling tank 3c.

Therefore, as anticipated, the electronic controller 90 can be operatively connected to the electronic board 82, or the electronic board 82 can be part of the electronic controller 90 and allow the multifunction device 1 to be controlled from the outside. In this regard, the electronic controller 90 can be programmable and may include wireless interface means, such as Wi-Fi, Bluetooth^{™}, RFID, infrared or other systems, to allow control via remote means, such as remote controls.

Among the several functions that can be provided by the electronic controller 90, we can mention the anti-flooding alarm that blocks the operation of the device 1 in case of hydraulic leakage therein, the alarm relating to lack of incoming water, which blocks the operation of the device 1 in case of low flow rate and/or pressure of the fluid entering both the device 1 and the cooling system, the filter saturation alarm, optionally with a timed double displacement check, so that if one of the two preset parameters is exceeded the device 1 goes into alarm, the checking of the state of charge of the carbonator 300 connected to the device 1; the alarm can be visual on the display 90 and/or acoustic, depending on the different alarms.

Hence, the electronic controller 90 allows the gathering of useful information relating to the operation and possible anomalies of the operating device 1 and furthermore allows part of the recorded data to be sent to the display 92.

Therefore, for example, the display 92 is a component suitable for the user to view parameters of interest. These parameters of interest are therefore related to almost all the components of the device 1, and in particular are the data received and processed, also on command, from/by the electronic controller 90 and also the electronic board 82.

The display 92 is preferably a digital display.

For instance, the display 92 can allow the display of data relating to the operating state of the device 1, the type of water during its delivery, the active oxygen and its decreasing operating time during ozone delivery, the name and number of the service centre in the event of alarms, the temperature of the cooling tank and the selected temperature threshold value, the quality status of the delivered water by a continuous check of its electrical conductivity, the quality control of the delivered water in compliance with the desired standard.

The operation of the multifunction device for the treatment of fluids 1, previously described in structural terms, is as follows.

The user manually operates one of the delivery levers 671 or 681, or operates both. The operation of at least one of the aforesaid levers 671 and/or 681 causes a negative pressure inside the delivery taps 670 and/or 680, which is detected by the thrust meter 911.

The thrust meter 911 then sends signals to the electronic controller 90 and thereby operates the valve 2 and the pressurisation unit 4.

The valve 2 then allows the fluid to flow from the feed intake 61 to the inside of the circuit defined by the multifunction device 1.

The fluid or water then passes through the first filtration apparatus 3a and is then sent on both to the inlet of the pressurisation unit 4 and to the entrance of the outlet section 52 of the permeation device 5 and in particular to the mixing hole 524.

The pressurisation unit 4 defines the flow rate as well as the pressure of the fluid entering the permeation device 5, at the entrance of the inlet section 50 and in particular at the inlet hole 500.

The pressurised fluid flows through the feed channel 50a and reaches a bifurcation: part of the fluid flows into the secondary inlet channel 50c and reaches a secondary inlet hole 502, which introduces the fluid into any other filtration apparatus or onto a pressure sensor; another part of the fluid flows through the main inlet channel 50b and is introduced inside the central body 51 through the primary inlet hole 501.

In the central body 51 the fluid is further treated by the permeability membrane and is therefore divided into a useful fluid and a discharge fluid.

The useful fluid is introduced into the main discharge hole 520 at the outlet section 52, whereas the discharge fluid is introduced into the secondary discharge hole 521, again at the outlet section 52.

The discharge fluid is made to flow into the secondary outlet channel 52b and then, by means of the first valve connector 62, to the discharge intake 63.

The useful fluid enters the main outlet channel 52a and heads for the main discharge hole 520.

During the passage through the main outlet channel 52a the useful fluid can be mixed with the processed fluid coming directly from the first filtration apparatus 3a. The mixing can take place thanks to the regulator 525 which, depending on the position of the slider 525a, prevents or allows in a regulated manner the entry of the fluid from the first apparatus 3a by means of the mixing channel 52c.

The processed fluid is then caused to flow out of the main outlet hole 522 and enters the elements included in the connecting members 6.

The fluid enters the connector 64, where it is monitored by the capture element 914, and proceeds to the first connector 65 where the flow is bifurcated into 2 channels. The first channel leads to a second filtration apparatus 3b, which further filtrates the fluid. In addition, the filtered fluid is introduced into a cooling tank 3c to be cooled down.

The newly filtered and refrigerated fluid can then be introduced, by means of the second valve connector 68, into the first delivery tap and comes out in the form of cooled alkalised fluid 10, as possibly required.

Alternatively, the cooled alkalised fluid is treated by the carbonator 300 and flows out of the third delivery tap 310 in the form of a carbonated refrigerated fluid 40.

Similarly, starting from the second connector 65, the other part of the fluid can be introduced, by means of a third valve connector 66, into the third connector 67.

At this connector, the fluid is enriched with ozone coming from the gas generator 8. The gas generator 8 draws air or oxygen molecules from the gas pump 81 and produces the gas required for the enrichment by means of a micro-discharge generated by the electric board 82 controlled by the electronic controller 90.

This micro-discharge lasting a few nanoseconds, but still 2.5/3 times greater than that naturally existing in the air, generates free electrons, causing the bond in the oxygen molecule (O₂) to break.

The breakage allows the release of oxygen atoms (O), which, in turn, collide with other oxygen molecules, creating ozone (Os).

The ozone thus produced is blown into the production water by the connector 67, suitably a Venturi fitting. The Venturi fitting functionally allows the ozone produced to be injected into the water in vacuo.

The fluid mixed with ozone is then introduced into a second delivery tap 680 from which it comes out in the form of ozonated fluid 20, if required.

The multifunction device 1 is thus able to supply the user with an alkalised fluid 10, for example alkalised water, or with an ozonated fluid 20, for example ozonated water.

These fluids can flow out of the taps one by one or simultaneously.

Preferably, the use of a copper duct or tubing, which has the characteristic of eliminating bacterial proliferation, is preferably provided at the delivery points.

It is also possible, simultaneously and not, to introduce aeriform fluids or, better said, gases 30 generated through the fourth valve connector 69 connected to the gas generator 8, and more precisely to the gas tank 8b, into the environment.

The generated gas 30 is preferably ozone. When the molecule charged with ozone (Os) comes into contact with something "capable of oxidizing", the charge of the ozone molecule flows directly over it. This occurs because ozone is very unstable and tends to turn back into its stable form (O₂). Ozone can become oxidised with all kinds of materials, but also with smells and microorganisms such as viruses, moulds and bacteria. The additional oxygen atom is released from the ozone molecule and binds to the other material. Only the pure and stable oxygen molecule remains in the end.

The introduction of ozone is one of the strongest oxidation techniques available for oxidizing solutes.

Ozone can be used for a wide range of purification processes, however the main benefit is given by its clean character, because it only oxidises the materials, almost without forming by-products. Since ozone has a strong distinctive smell, even very low concentrations are quickly noticed. This generally makes it safe to work with it. As for the electronic controller 90, it allows this device to be managed automatically and allows the quality of the fluid (water) to be analysed continuously, thus allowing the desired quality of the circulating fluid to be checked continuously and simultaneously with the delivery, so that it meets the requirements set out by the current law rules on this matter, while sending a visual message to the display 92 with which the device 1 is equipped.

The display 92 allows interfacing with the end user, be he/she a qualified technician or an inexperienced consumer, thus visually indicating the quality and quantity levels of the fluid.

Furthermore, the electronic controller 90 constantly checks for the presence of water therein by means of the automatic system for the inlet hydraulic supply, if necessary sending a stop alarm in case of lack of fluid by means of the capture element 914 included in the control means 9.

A different pressure below pre-established thresholds induces an alarm state in the device 1 and an impulse is given to the valve 2 to shut off the hydraulic circuit, and therefore the delivery, with subsequent blocking of the electronic system too.

Moreover, the electronic controller 90 provides an automatic start and stop system in order to avoid bacterial proliferation; this function allows the device 1 to be started automatically in order to avoid problems of bacterial proliferation in the osmotic body, the filtration systems and the internal hydraulic circuit.

The electronic controller 90 is also equipped with a filter exhaustion/saturation control system, which is directly connected to the displacement meter inside the valve 2 and warns when the set limit of litres delivered has been reached by giving a warning to the user via acoustic signalling and visual display.

The device 1 is further equipped with an automatic locking system for any leaks detected by the flooding sensor 912 directly connected to the electronic controller 90 and with an automatic locking system for thermal protection through a temperature sensor 913 directly connected to the electronic controller 90 and the motor of the pressurisation unit 4.

The multifunction device for the treatment of fluids 1 according to the invention achieves important advantages.

In fact, the multifunction device 1 allows the performance of multiple functions, both individually and simultaneously, allowing the processing of both a fluid usable by the user and possibly by the environment surrounding the user thanks to the emission of a gas.

In particular, it is possible to produce substances such as alkalised water enriched with negative ions and/or ozonated water that can be used in the food sector, for example to promote digestion, or for the production of mouthwashes or ointments for body care and also in the medical field.

Furthermore, the gas/ozone dispenser can be exploited for therapeutic uses or for environmental healthiness.

As a result, another important advantage of the device 1 is due to its great versatility. Versatility refers not only to the types of substances that can be produced, but also to the type of use that is deemed useful for the device itself.

In fact, it can be used both in the medical/clinical field and in typically domestic settings, managing to functionally and interactively adapt to both of the example contexts. The device 1 also lends itself to be used for the sterilization of work tools, the disinfection of patients' wounds during the anti-decubitus period and for all uses permitted by the current law rules regulating the use of ozone and controlled waters both from the point of view of electrical conductivity and from that of pH and temperature of use, and for all uses of hydrogenated water.

Moreover, thanks to the regulator 525, the multifunction device is independent of any installation problem relating to the incoming fluid, i.e. its particular organoleptic character: in fact, the filtration conditions can be modified, for example, according to the different water resources used.

The electronic controller 90, together with the sensor members 91 and the display 92, allows also inexperienced users to handle the multifunction device 1 in complete safety, yet still benefiting from the full functionality of the same.

Therefore, another advantage is defined by the simplicity of use of the device 1.

The device 1 also features a considerable constructive simplicity characterised by quick couplings and a system of connecting members 6 substantially devoid of extensive piping with heavy load losses and designed to be minimized within the device 1.

In this sense, another great advantage is due to the reduction of interstitial residues, and therefore of potential bacterial agents that typically attack these residual substances deposited inside other similar plants.

A further advantage of the device 1 is due to the ease of maintenance.

In particular, this ease is guaranteed by the electronic controller 90, together with the sensor members 91 and the display 92, which is able to start and stop the device 1 as necessary and also to monitor the main characteristic parameters, if necessary informing the user of any system drifts requiring extraordinary maintenance.

In conclusion, another advantage of the device 1 is that of reducing the number of components included therein, with substantial savings in terms of production and maintenance costs and further reductions in time for any repairs or internal replacements.

The reduction of the number of components as well as of the size of the same make the multifunction device 1 advantageously reduced in terms of size and therefore easily portable and installable anywhere.

In addition, the advantages listed above are obtained in compliance with the international regulations in force on the subject.

The invention is susceptible of variations falling within the scope of the inventive concept as defined by the claims.

For instance, the taps 680 and 681 can be incorporated into a two way tap and therefore further compacted.

Furthermore, the connecting members 6 can be of a different nature or, where possible, could be omitted. In this sense, it is specified that as the connecting members are typically ducts inside which fluids flow, they are optional connection ends and therefore, for example, the permeation device 5 can be regarded as operatively connected to the gas generator 8 when considering the intervening means as optional means.

## Claims

1. A multifunction device (1) for the treatment of fluids, comprising:
- a valve (2) suitable to allow or obstruct the entry of a fluid flow into said multifunction device (1),
- at least a first filtration apparatus (3a) comprises an inlet and two outlets, said inlet being operatively connected to said valve (2) and suitable to filter said fluid coming from said valve (2),
- a pressurisation unit (4) operatively connected to said first filtration apparatus (3a) through the first of said two outlets and suitable to pressurise said fluid in said multifunction device (1),
- a permeation device (5) designed for operating by reverse osmosis operatively connected to said pressurisation unit (4) and said first filtration apparatus (3a) through the second of said two outlets, and comprising:
- an inlet portion (50) arranged at the connection between said permeation device (5) and said pressurisation unit (4),
- an outlet portion (52) arranged at the connection between said permeation system (5) and said first filtration apparatus (3a)
- a central containment body (51) arranged between said inlet portion (50) and said outlet portion (52),
- said outlet portion (52) including a regulator (525) suitable to mix the fluid coming from said first filtration apparatus (3a) with the filtered fluid coming from said central body (51),
- a second filtration apparatus (3b) having an inlet operatively connected to said outlet portion (52) and suitable to transform said fluid comprised in said multifunction device (1) into an alkalised fluid,
- connecting members (6) configured to connect in fluidic passage at least said second filtration apparatus (3b) and said portion (52),
- a cooling tank (3c) operatively connected to said second filtration apparatus (3b) and suitable to cool said alkalised fluid, so as to provide a cooled alkalised fluid (10)
- said cooling tank (3c) being suitable to allow the delivery of said cooled alkalised fluid (10) and comprising a carbonator (300) suitable to allow said cooled alkalised fluid (10) to bind with carbon dioxide CO₂ to provide a carbonated cooled fluid (40),
- said outlet portion (52) being connected to said first filtration apparatus (3a) via a mixing hole (524), being connected to said central containment body (51) via a main discharge hole (520), being connected to said connecting members (6) via a main outlet hole (522) and comprising a main outlet channel (52a) connecting said main discharge hole (520) and said main outlet hole (522) and a mixing channel (53c) connects said mixing hole (524) to said main outlet channel (52a),
- said outlet portion (52) being connected to said second filtration apparatus (3b) via said main outlet hole (522),
- wherein said outlet portion (52) further comprises a secondary discharge hole (521) connected to said containment central body (51) and suitable for receiving discharge fluid coming from said central containment body (51), said secondary discharge hole (521) being connected via a secondary outlet channel (52b) to a secondary outlet hole (523) of said outlet portion (52),
and said device (1) being **characterised in that**
- said outlet portion (52) comprises a regulator (525) configured to allow or obstruct the communication between said mixing channel (53c) and said main outlet channel (52a) so that said regulator (525) regulates the quantity of said fluids coming from said first filtration apparatus (3a) and from said central containment body (51) to be mixed.

2. The multifunction device (1) according to the preceding claim, wherein said second filtration apparatus (3b) is made of zeolites.

3. The multifunction device (1) according to the preceding claim, wherein said regulator (525) comprises a slider (525a), a chamber (525b) and control means (525c), said chamber (525b) being a space formed within the outlet portion (52) operatively connected to the mixing channel (53c) and the main outlet channel (52a), said slider (525a) being housed and moved inside the chamber (525b) to obstruct, at least in one position, the communication between the mixing channel (53c) and said main outlet channel (52a) and said control means (525c) comprising an adjustment screw and said adjustment screw being loosely engaged with said slider (525a) and suitable to mechanically control said slider (525a) inside said chamber (525a).

4. The multifunction device (1) according to one or more of the preceding claims, comprising a gas generator (8) operatively connected to said outlet portion (52) via said main outlet hole (522), and suitable to introduce ozone into said circulating fluid in said multifunction device (1).

5. The multifunction device (1) according to claim 4, wherein said gas generator (8) is suitable to blow ozone into said circulating fluid to provide an ozonated fluid (20) and/or to deliver ozone in the form of a gas (30) generated by said gas generator (8).

6. The multifunction device (1) according to claims 4 and 5, wherein said gas generator (8) is operatively connected to a gas pump (81) and an electronic board (82), said gas pump (81) being suitable to suck said air from the outside towards the inside of said multifunction device (1), and said electronic board (82) being connected to said gas pump (81) and suitable to power and control said ozone generator (8) and said gas pump (81).

7. The multifunction device (1) according to one or more of the preceding claims, comprising a capture element (914) operatively connected to said outlet section (52) and suitable to detect functional parameters from said fluid coming out of said outlet section (52) and suitable to emit electronic signals.

8. The multifunction device (1) according to one or more of the preceding claims, comprising an electronic controller (90) suitable to process the electronic signals from sensor members (91), said sensor members (91) comprising said capture element (914), a thrust meter (911), a flooding sensor (912) and a temperature sensor (913), and said controller (90) being suitable to monitor said multifunction device (1) by means of said sensor members (91) and to electronically control the operation of said multifunction device (1).

9. The multifunction device (1) according to one or more of the preceding claims, wherein said cooling tank (3c) is cooled by a water cooling system and said temperature sensor (913) is operatively connected to said cooling system so as to detect the operating temperature of said cooling tank (3c).

10. The multifunction device (1) according to the preceding claim, comprising a display (92) suitable to display information relating to the operating state of said multifunction device (1), said information being acquired by said electronic controller (90).

11. The multifunction device (1) according to one or more of the preceding claims, wherein said central containment body (51) of said permeation system (5) comprises an osmotic reverse osmosis membrane, said membrane comprising pores of a size less than 0.01 µm.

12. The multifunction device (1) according to one or more of the preceding claims, wherein said first filtration system (3a) comprises activated carbon and a copper-zinc compound and is suitable to remove contaminating particles of a size at least less than 0.5 µm by means of an oxidation-reduction or redox chemical reaction.

13. The multifunction device (1) according to one or more of the preceding claims, comprising a first delivery tap (680) operatively connected to said cooling tank (3c), a second delivery tap (670) operatively connected to said outlet section (52) via main outlet hole (522) and connecting members (6), and said fluid tank (8a), a third delivery tap (310) operatively connected to said carbonator (300), and a fourth valve connector (69) operatively connected to said gas tank (8b), said first delivery tap (680) delivering said cooled alkalised fluid (10), said second delivery tap (670) delivering said ozonated fluid (20), said third delivery tap (310) delivering said carbonated cooled fluid (40), and said fourth valve connector (69) allowing or completely obstructing the escape of said generated gas (30).

14. A fluid treatment process carried out with a multifunction device according to at least one of claims 1-13, comprising:
- the filtering of a fluid so as to realize a filtered fluid,
- the pressurising of at least part of the filtered fluid,
- the osmotisation, after pressurisation, of part of said filtered fluid so as to provide an osmotised fluid,
- the mixing of filtered fluid and osmotised fluid so as to provide a treated fluid by regulating the quantity of said filtered fluid and osmotised fluid within said treated fluid,
- the alkalinisation of said treated fluid so as to provide an alkalised treated fluid,
- the cooling of said alkalised treated fluid so as to provide a cooled, alkalised and treated fluid (10),
- the delivery of said cooled alkalised fluid (10) and alternatively or simultaneously the carbonation and delivery of said cooled alkalised fluid (10) so as to provide a carbonated, cooled, alkalised and treated fluid (40).

15. The process according to the preceding claim, further comprising:
- the generation of ozone gas,
- the ozonation of said treated fluid so as to provide a fluid ozonated with part of said ozone,
- the delivery of said ozonated fluid and alternatively or simultaneously the delivery of part of said generated ozone partially used for the ozonation.

## Patentansprüche

1. Multifunktionsvorrichtung (1) zur Behandlung von Flüssigkeiten, umfassend:
- ein Ventil (2), das geeignet ist, den Eintritt eines Flüssigkeitstroms in die Multifunktionsvorrichtung (1) zu ermöglichen oder zu verhindern,
- mindestens ein erstes Filtrationsgerät (3a) umfassend einen Einlass und zwei Auslässe, wobei der Einlass operativ mit dem Ventil (2) verbunden ist und geeignet ist, die von dem Ventil (2) kommende Flüssigkeit zu filtern,
- eine Druckbeaufschlagungseinheit (4), die operativ mit dem ersten Filtrationsgerät (3a) über den ersten der beiden Auslässe verbunden ist und geeignet ist, die Flüssigkeit in der Multifunktionsvorrichtung (1) unter Druck zu setzen
- eine Permeationsvorrichtung (5), die für den Betrieb durch Umkehrosmose ausgelegt ist und operativ mit der Druckbeaufschlagungseinheit (4) und dem ersten Filtrationsgereät (3a) über den zweiten der beiden Auslässe verbunden ist, und umfassend:
- einen Einlassabschnitt (50) der an der Verbindung zwischen der Permeationsvorrichtung (5) und der Druckbeaufschlagungseinheit (4) angeordnet ist,
- einen Auslassabschnitt (52), der an der Verbindung zwischen der Permeationsvorrichtung (5) und dem ersten Filtrationsgerät (3a) angeordnet ist,
- einen Zentralrückhaltekörper (51), der zwischen dem Einlassabschnitt (50) und dem Auslassabschnitt (52) angeordnet ist, wobei
- der Auslassabschnitt (52) einen Regler (525) enthält, der geeignet ist, die von dem ersten Filtrationsgerät (3a) kommende Flüssigkeit mit der von dem Zentralrückhaltekörper (51) kommenden gefilterten Flüssigkeit zu mischen,
- ein zweites Filtrationsgerät (3b) aufweisend einen Einlass, der operativ mit dem Auslassabschnitt (52) verbunden ist und geeignet ist, die in der Multifunktionsvorrichtung (1) enthaltene Flüssigkeit in eine alkalische Flüssigkeit umzuwandeln
- Verbindungselemente (6), die so konfiguriert sind, dass sie in einem fluidischen Durchgang mindestens das zweite Filtrationsgerä (3b) und den genannten Teil (52) verbinden,
- einen Kühltank (3c), der operativ mit dem zweiten Filtrationsgerät (3b) verbunden ist und geeignet ist, die alkalisierte Flüssigkeit zu kühlen, um eine gekühlte alkalisierte Flüssigkeit (10) bereitzustellen, wobei der Kühltank (3c) geeignet ist, die Abgabe der gekühlten alkalisierten Flüssigkeit zu ermöglichen, und umfassend einen Carbonisierer (300), der geeignet ist, die Bindung der gekühlten alkalisierten Flüssigkeit (10) mit Kohlendioxid CO2 zu ermöglichen, um eine carbonisierte gekühlte Flüssigkeit (40) bereitzustellen,
- wobei der Auslassabschnitt (52) mit dem ersten Filtrationsgerät (3a) über eine Mischöffnung (524) verbunden ist, mit dem Zentralrückhaltekörper (51) über eine Hauptabflussöffnung (520) verbunden ist, mit den Verbindungselementen (6) über eine Hauptauslassöffnung (522) verbunden ist und umfassend einen Hauptauslasskanal (52a), der die Hauptabflussöffnung (520) und die Hauptauslassöffnung (522) verbindet und ein Mischkanal (53c) die Mischöffnung (524) und den Hauptauslasskanal (52a) verbindet,
- wobei der Auslassabschnitt (52) mit dem zweiten Filtrationsgerät (3b) über die Hauptauslassöffnung (522) verbunden ist,
- wobei der Auslassabschnitt (52) ferner eine Nebenabflussöffnung (521) umfasst, die mit dem Zentralrückaltekörper (51) verbunden ist und geeignet ist, die von dem Zentralrückhaltekörper (51) kommende Abflussflüssigkeit aufzunehmen, wobei die Nebenabflussöffnung (521) mit einer Nebenauslassöffnung (523) des Auslassabschnitt (52) über einen Nebenauslasskanal (52b) verbunden ist,
und die Vorrichtung (1) **dadurch gekennzeichnet dass**
- der Auslassabschnitt (52) einen Regler (525) umfasst, der so konfiguriert ist, die Kommunikation zwischen dem Mischkanal (53c) und dem Hauptauslasskanal (52a) zu ermöglichen or zu verhindern, so dass der Regler (525) die von dem ersten Filtrationsgerät (3a) und von dem Zentralrückhaltekörper (51) kommende Flüssigkeitsmenge einstellt, die gemischt werden muss.

2. Multifunktionsvorrichtung (1) nach dem vorhergehenden Anspruch, wobei das zweite Filtrationsgerät (3b) aus Zeolithen besteht.

3. Multifunktionsvorrichtung (1) nach dem vorhergehenden Anspruch, wobei der Regler (525) einen Schieber (525a), eine Kammer (525b) und Steuermittel (525c) umfasst, wobei die Kammer (525b) ein Raum ist, der innerhalb des Auslassabschnitts (52) ausgebildet ist und operativ mit dem Mischkanal (53c) und dem Hauptauslasskanal (52a) verbunden ist, wobei der Schieber (525a) innerhalb der Kammer aufgenommen ist und bewegt wird, um zumindest in einer Position die Kommunikation zwischen dem Mischkanal (53c) und dem Hauptauslasskanal (52a) zu verhindern, wobei die Steuermttel (525c) eine Einstellschraube umfassen, und die Einstellschraube lose mit dem Schieber (525a) in Eingriff steht und geeignet ist, den Schieber (525a) innerhalb der Kammer (525a) mechanisch zu steuern.

4. Multifunktionsvorrichtung (1) nach einem oder mehreren der vorhergehenden Ansprüche, umfassend einen Gaserzeuger (8), der operativ mit dem Auslassabschnitt über die Hauptauslassöffnung (522) verbunden ist und geeignet ist, Ozon in die zirkulierende Flüssigkeit in der Multifunktionsvorrichtung (1) einzuleiten.

5. Multifunktionsvorrichtung (1) nach Anspruch 4, wobei der Gaserzeuger (8) geeignet ist, Ozon in die zirkulierende Flüssigkeit zu blasen, um eine ozonisierte Flüssigkeit (20) bereitzustellen und/oder Ozon in Form eines durch den Gaserzeuger (8) erzeugten Gases (30) auszugeben.

6. Multifunktionsvorrichtung (1) nach Anspruch 4 und 5, wobei der Gaserzeuger (8) operativ mit einer Gaspumpe (81) und einer elektronischen Platine (82) verbunden ist, wobei die Gaspumpe (81) geeignet ist, die Luft von aussen nach innen der Multifunktionsvorrichtung (1) anzusaugen, und wobei die elektronische Platine (82) mit der Gaspumpe (81) verbunden ist und geeignet ist, den Ozonerzeuger (8) und die Gaspumpe (81) zu versorgen und zu steuern.

7. Multifunktionsvorrichtung (1) nach einem oder mehreren der vorhergehenden Ansprüche, umfassend ein Fangelement (914), das operativ mit dem Auslassabschnitt (52) verbunden ist und geeignet ist, funktionelle Parameter aus der aus dem Auslassabschnitt (52) austretenden Flüssigkeit zu erfassen und elektronische Signale auszusenden.

8. Multifunktionsvorrichtung (1) nach einem oder mehreren der vorhergehenden Ansprüche, umfassend eine elektronische Steuerung (90), die geeignet ist, die elektronische Signale von Sensorelementen (91) zu verarbeiten, wobei die Sensorelemente (91) ein Fangelement (914), einen Schubmesser (911), einen Überschwemmungssensor (912) und einen Temperatursensor (913) umfassen und wobei die Steuerung (90) geeignet ist, die Multifunktionsvorrichtung (1) mittels der Sensorelemente (91) zu überwachen und den Betrieb der Multifunktionsvorrichtung (1) elektronisch zu steuern.

9. Multifunktionsvorrichtung (1) nach einem oder mehreren der vorhergehenden Ansprüche, wobei der Kühltank (3c) durch ein Wasserkühlsystem gekühlt wird und der Temperatursensor (913) operativ mit dem Kühlsystem verbunden ist, um die Betriebstemperatur des Kühltanks (3c) zu erfassen.

10. Multifunktionsvorrichtung (1) nach dem vorhergehenden Anspruch, umfassend einen Bildschirm (92), der geeignet ist, Informationen bezüglich des Betriebszustands der genannten Multifunktionsvorrichtung (1) anzuzeigen, wobei die Informationen durch die elektronische Steuerung (90) erfasst werden.

11. Multifunktionsvorrichtung (1) nach einem oder mehreren der vorhergehenden Ansprüche, wobei der Zentralrückhaltekörper (51) des Permeationssystems (5) eine osmotische Umkehrosmosmembran umfasst, wobei die Membran Poren mit einer Größe von weniger als 0.01 µm umfasst.

12. Multifunktionsvorrichtung (1) nach einem oder mehreren der vorhergehenden Ansprüche, wobei das erste Filtrationsgerät (3a) Aktivkohle und eine Kupfer-Zinkverbindung umfasst und geeignet ist, verunreinigende Partikel mit einer Größe von mindestens weniger als 0,5 µm durch eine chemische Reduktions-OxidationsReaktion oder Redoxreaktion zu entfernen.

13. Multifunktionsvorrichtung (1) nach einem oder mehreren der vorhergehenden Ansprüche, umfassend einen ersten Abgabehahn (680), der operativ mit dem Kühltank (3c) verbunden ist, einen zweiten Abgabehahn (670), der operativ mit dem Auslassabschnitt (52) über die Hauptauslassöffnung (522) und Verbindungselementen (6) verbunden ist, und den Flüssigkeitstank (8a), einen dritten Abgabehahn (310), der operativ mit dem Carbonisierer (300) verbunden ist, und einen vierten Ventilanschluss (69), der operativ mit dem Gastank (8b) verbunden ist, wobei der erste Abgabehahn (680) gekühlte, alkalisierte Flüssigkeit (10) abgibt, der zweite Abgabehahn (670) ozonisierte Flüssigkeit (20) abgibt, der dritte Abgabehahn (310) carbonisierte gekühlte Flüssigkeit (40) abgibt und der vierte Ventilanschluss (69) das Entweichen des erzeugten Gases (30) ermöglicht oder vollständig verhindert.

14. Flüssigkeitsbehandlungsverfahren, das mit einer Multifunktionsvorrichtung nach mindestens einem der Ansprüche 1-13 durchgeführt wird, umfassend:
- Filtern einer Flüssigkeit, um eine gefilterte Flüssigkeit zu erhalten,
- Druckbeaufschlagen eines Teils der gefilterten Flüssigkeit,
- Osmotisieren eines Teil der gefilterten Flüssigkeit nach der Druckbeaufschlagung, um eine osmotisierte Flüssgkeit zu erhalten,
- Mischen der gefilterten Flüssigkeit und der osmotisierten Flüssigkeit, um eine behandelte Flüssigkeit zu erhalten, indem die Menge der gefilterten Flüssigkeit und der osmotisierten Flüssigkeit in der behandelten Flüssigkeit eingestellt wird,
- Alkalisieren der behandelten Flüssigkeit, um eine alkalisierte und behandelte Flüssigkeit zu erhalten,
- Kühlen der alkalisierten behandelten Flüssigkeit, um eine gekühlte, alkalisierte und behandelte Flüssigkeit (10) zu erhalten,
- Abgeben der gekühlten alkalisierten Flüssigkeit (10) und alternativ oder gleichzeitig Carbonisieren und Abgeben der gekühlten alkalisierten Flüssigkeit (10), um eine carbonisierte, gekühlte und behandelte Flüssigkeit (40) zu erhalten.

15. Verfahren nach dem vorhergehenden Anspruch, ferner umfassend:
- Erzeugen Ozongas,
- Ozoniesieren der behandelten Flüssigkeit, um eine mit Teil des Ozons ozonisierte Flüssigkeit zu erhalten,
- Abgeben der ozonisierten Flüssigkeit und alternativ oder gleichzeitig Abgeben eines Teils des erzeugten Ozons, das teilweise für die Ozonisierung verwendet wird.

## Revendications

1. Un dispositif multifonction (1) pour le traitement des fluides, comprenant :
- une vanne (2) adaptée pour permettre ou empêcher l'entrée d'un flux de fluide dans ledit dispositif multifonction (1),
- au moins un premier appareil de filtration (3a) comprenant une entrée et deux sorties, ladite entrée étant opérationnellement connectée à ladite vanne (2) et adaptée pour filtrer ledit fluide provenant de ladite vanne (2),
- une unité de pressurisation (4) opérationnellement connectée audit premier appareil de filtration (3a) par la première de ces deux sorties et adaptée pour pressuriser ledit fluide dans ledit dispositif multifonction (1),
- un dispositif de perméation (5) conçu pour fonctionner par osmose inverse opérationnellement connecté à ladite unité de pressurisation (4) et audit premier appareil de filtration (3a) par la seconde de ces deux sorties, et comprenant :
- une section d'entrée (50) disposée à la connexion entre ledit dispositif de perméation (5) et ladite unité de pressurisation (4),
- une section de sortie (52) disposée à la connexion entre ledit système de perméation (5) et ledit premier appareil de filtration (3a),
- un corps de confinement central (51) disposé entre ladite section d'entrée (50) et ladite section de sortie (52),
- ladite section de sortie (52) incluant un régulateur (525) adapté pour mélanger le fluide provenant dudit premier appareil de filtration (3a) avec le fluide filtré provenant dudit corps central (51).
- un second appareil de filtration (3b) ayant une entrée opérationnellement connectée à ladite section de sortie (52) et adaptée pour transformer ledit fluide compris dans ledit dispositif multifonction (1) en un fluide alcalinisé,
- des éléments de connexion (6) configurés pour connecter en passage fluidique au moins ledit second appareil de filtration (3b) et ladite section (52),
- un réservoir de refroidissement (3c) opérationnellement connecté audit second appareil de filtration (3b) et adapté pour refroidir ledit fluide alcalinisé, afin de fournir un fluide alcalinisé refroidi (10),
- ledit réservoir de refroidissement (3c) étant adapté pour permettre la livraison dudit fluide alcalinisé refroidi (10) et comprenant un carbonateur (300) adapté pour permettre audit fluide alcalinisé refroidi (10) de se lier au dioxyde de carbone CO₂ pour fournir un fluide refroidi carbonaté (40),
- ladite section de sortie (52) étant connectée audit premier appareil de filtration (3a) par un trou de mélange (524), étant connectée audit corps de confinement central (51) par un trou de décharge principal (520), étant connectée auxdits éléments de connexion (6) par un trou de sortie principal (522) et comprenant un canal de sortie principal (52a) reliant ledit trou de décharge principal (520) et ledit trou de sortie principal (522) et un canal de mélange (53c) connecté ledit trou de mélange (524) audit canal de sortie principal (52a),
- ladite section de sortie (52) étant connectée audit second appareil de filtration (3b) par ledit trou de sortie principal (522),
- où ladite section de sortie (52) comprend en outre un trou de décharge secondaire (521) connecté audit corps de confinement central (51) et adapté pour recevoir le fluide de décharge provenant dudit corps de confinement central (51), ledit trou de décharge secondaire (521) étant connectépar par un canal de sortie secondaire (52b) à un trou de sortie secondaire (523) de ladite section de sortie (52),
et ledit dispositif (1) étant **caractérisé en ce que**
- ladite section de sortie (52) comprend un régulateur (525) configuré pour permettre ou empêcher la communication entre ledit canal de mélange (53c) et ledit canal de sortie principal (52a) de sorte que ledit régulateur (525) régule la quantité à mélanger desdits fluides provenant du premier appareil de filtration (3a) et dudit corps de confinement central (51).

2. Le dispositif multifonction (1) selon la revendication précédente, où ledit second appareil de filtration (3b) est constitué de zéolites.

3. Le dispositif multifonction (1) selon la revendication précédente, où ledit régulateur (525) comprend un curseur (525a), une chambre (525b) et des moyens de contrôle (525c), ladite chambre (525b) étant un espace formé à l'intérieur de la section de sortie (52) opérationnellement connecté au canal de mélange (53c) et au canal de sortie principal (52a), ledit curseur (525a) étant logé et déplacé à l'intérieur de la chambre (525b) pour empêcher, au moins dans une position, la communication entre le canal de mélange (53c) et ledit canal de sortie principal (52a) et lesdits moyens de contrôle (525c) comprenant une vis de réglage et ladite vis de réglage étant engagée de manière lâche avec ledit curseur (525a) et adaptée pour contrôler mécaniquement ledit curseur (525a) à l'intérieur de ladite chambre (525a).

4. Le dispositif multifonction (1) selon une ou plusieurs des revendications précédentes, comprenant un générateur de gaz (8) opérationnellement connecté à ladite section de sortie (52) par ledit trou de sortie principal (522), et adapté pour introduire de l'ozone dans ledit fluide circulant dans ledit dispositif multifonction (1).

5. Le dispositif multifonction (1) selon la revendication 4, où ledit générateur de gaz (8) est adapté pour insuffler de l'ozone dans ledit fluide circulant pour fournir un fluide ozoné (20) et/ou pour délivrer de l'ozone sous forme de gaz (30) généré par ledit générateur de gaz (8).

6. Le dispositif multifonction (1) selon les revendications 4 et 5, où ledit générateur de gaz (8) est opérationnellement connecté à une pompe à gaz (81) et à une carte électronique (82), ladite pompe à gaz (81) étant adaptée pour aspirer de l'air de l'extérieur vers l'intérieur dudit dispositif multifonction (1), et ladite carte électronique (82) étant connectée à ladite pompe à gaz (81) et adaptée pour alimenter et contrôler ledit générateur d'ozone (8) et ladite pompe à gaz (81).

7. Le dispositif multifonction (1) selon une ou plusieurs des revendications précédentes, comprenant un élément de capture (914) opérationnellement connecté à ladite section de sortie (52) et adapté pour détecter des paramètres fonctionnels du dit fluide sortant de ladite section de sortie (52) et adapté pour émettre des signaux électroniques.

8. Le dispositif multifonction (1) selon une ou plusieurs des revendications précédentes, comprenant un contrôleur électronique (90) adapté pour traiter les signaux électroniques des éléments capteurs (91), lesdits éléments capteurs (91) comprenant ledit élément de capture (914), un manomètre (911), un capteur d'inondation (912) et un capteur de température (913), et ledit contrôleur (90) étant adapté pour surveiller ledit dispositif multifonction (1) au moyen desdits éléments capteurs (91) et pour contrôler électroniquement le fonctionnement dudit dispositif multifonction (1).

9. Le dispositif multifonction (1) selon une ou plusieurs des revendications précédentes, où ledit réservoir de refroidissement (3c) est refroidi par un système de refroidissement à eau et ledit capteur de température (913) est opérationnellement connecté audit système de refroidissement afin de détecter la température de fonctionnement dudit réservoir de refroidissement (3c).

10. Le dispositif multifonction (1) selon la revendication précédente, comprenant un affichage (92) adapté pour afficher des informations relatives à l'état de fonctionnement dudit dispositif multifonction (1), lesdites informations étant acquises par ledit contrôleur électronique (90).

11. Le dispositif multifonction (1) selon une ou plusieurs des revendications précédentes, où ledit corps de confinement central (51) dudit système de perméation (5) comprend une membrane d'osmose inverse, ladite membrane comprenant des pores d'une taille inférieure à 0,01 pm.

12. Le dispositif multifonction (1) selon une ou plusieurs des revendications précédentes, où ledit premier système de filtration (3a) comprend du charbon activé et un composé de cuivre-zinc et est adapté pour éliminer les particules contaminantes d'une taille au moins inférieure à 0,5 m par le biais d'une réaction chimique d'oxydoréduction ou redox.

13. Le dispositif multifonction (1) selon une ou plusieurs des revendications précédentes, comprenant un premier robinet de livraison (680) opérationnellement connecté audit réservoir de refroidissement (3c), un deuxième robinet de livraison (670) opérationnellement connecté à ladite section de sortie (52) par le trou de sortie principal (522) et les éléments de connexion (6), et ledit réservoir de fluide (8), un troisième robinet de livraison (310) opérationnellement connecté audit carbonateur (300), et un quatrième connecteur de vanne (69) opérationnellement connecté audit réservoir de gaz (8b), ledit premier robinet de livraison (680) délivrant ledit fluide alcalinisé refroidi (10), ledit deuxième robinet de livraison (670) délivrant ledit fluide ozoné (20), ledit troisième robinet de livraison (310) délivrant ledit fluide carbonaté refroidi (40), et ledit quatrième connecteur de vanne (69) permettant ou empêchant complètement l'échappement dudit gaz généré (30).

14. Un procédé de traitement de fluide réalisé avec un dispositif multifonction selon au moins l'une des revendications 1 à 13, comprenant :
- la filtration d'un fluide afin de réaliser un fluide filtré,
- la mise sous pression d'au moins une section du fluide filtré,
- l'osmosefisation, après la mise sous pression d'une partie dudit fluide filtré a fin d'obtenir un fluide osmotisé,
- le mélange du fluide filtré et du fluide osmotisé afin de fournir un fluide traité en régulant la quantité dudit fluide filtré et du fluide osmotisé au sein dudit fluide traité,
- l'alcalinisation dudit fluide traité afin de fournir un fluide traité alcalinisé,
- le refroidissement dudit fluide traité alcalinisé afin de fournir un fluide refroidi, alcalinisé et traité (10),
- la livraison dudit fluide alcalinisé refroidi (10) et alternativement ou simultanément la carbonatation et la livraison dudit fluide alcalinisé refroidi (10) afin de fournir un fluide carbonaté, refroidi, alcalinisé et traité (40).

15. Le procédé selon la revendication précédente, comprenant en outre :
- la génération de gaz ozone,
- l'ozonation dudit fluide traité afin de fournir un fluide ozoné avec une section dudit ozone,
- la livraison dudit fluide ozoné et alternativement ou simultanément la livraison d'une section dudit ozone généré utilisé partiellement pour l'ozonation.
